(19) Europäisches Patentamt
European Patent Office
Office européen des brevets

(11) Numéro de publication : **0 283 389 B1**

(12) **FASCICULE DE BREVET EUROPEEN**

(45) Date de publication du fascicule du brevet :
**24.07.91 Bulletin 91/30**

(51) Int. Cl.⁵ : **B60K 17/20, F16H 1/445**

(21) Numéro de dépôt : **88400569.5**

(22) Date de dépôt : **10.03.88**

(54) **Dispositif de commande d'un différentiel à glissement contrôlé hydrauliquement et véhicule équipé de ce dispositif.**

(30) Priorité : **17.03.87 FR 8703672**

(43) Date de publication de la demande :
**21.09.88 Bulletin 88/38**

(45) Mention de la délivrance du brevet :
**24.07.91 Bulletin 91/30**

(84) Etats contractants désignés :
**DE GB IT**

(56) Documents cités :
**EP-A- 0 047 818**
**FR-A- 2 548 986**
**GB-A- 1 429 492**
**GB-A- 2 138 083**
**US-A- 2 991 664**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Bouveret, Jean-Michel**
**58 Bis, rue d'Estienne d'Orves**
**F-94340 Joinville le Pont (FR)**
Inventeur : **Aigouy, Michel**
**10 rue Paquet**
**F-78260 Acheres (FR)**

(74) Mandataire : **Durand, Yves Armand Louis et al**
**Cabinet Z. Weinstein 20, Avenue de Friedland**
**F-75008 Paris (FR)**

## Description

La présente invention a pour objet un dispositif de commande d'un différentiel à glissement contrôlé hydrauliquement.

Elle vise également un véhicule automobile à groupe moto-propulseur transversal dont le différentiel est équipé de ce dispositif.

Les dispositifs de commande proposés jusqu'à présent présentaient un certain nombre d'inconvénients sur le plan de l'encombrement et de la facilité d'adaptation, en particulier dans le cas où le différentiel est intégré dans un groupe moto-propulseur transversal de véhicule. Plus précisément, dans les systèmes connus de commande des différentiels, on n'avait pas résolu de façon satisfaisante le problème de l'encombrement gênant présenté par la partie hydraulique assurant le verrouillage du différentiel, ni prévu l'implantation de cette partie hydraulique dans un élément tel qu'un support de palier de la transmission pour ainsi minimiser l'encombrement et rendre aisée son adaptation à des groupes moto-propulseur existants.

Par ailleurs, on connaît d'après le document GB-A-2.138.083 un dispositif de commande de différentiel tel que décrit dans le préambule de la revendication 1.

Mais dans ce dispositif, le glissement du différentiel est contrôlé par coulissement de l'arbre de sortie lui-même, du carter contenant le différentiel, ce qui présente des inconvénients du fait de la masse importante de cet arbre transmetteur de couple.

La présente invention a pour but de résoudre les problèmes ci-dessus en proposant un dispositif de commande d'un différentiel qui est particulièrement fiable, peu coûteux et présente un encombrement minimal.

A cet effet, l'invention a pour objet un dispositif de commande d'un différentiel à glissement contrôlé hydrauliquement et logé dans un carter dont l'un des arbres de sortie est porté par un palier intérieur au carter, et par un palier extérieur à ce carter, caractérisé en ce que l'arbre de sortie est entouré par un organe tubulaire coulissant situé au niveau du palier intérieur dans le carter et par un tube coulissant bloqué en rotation par rapport au carter et prenant appui d'un côté sur un moyen d'actionnement supporté par le palier extérieur au carter et de l'autre côté sur ledit organe tubulaire coulissant qui coopère d'un côté avec des leviers radiaux agissant sur des disques coaxiaux à l'arbre de sortie pour faire varier le glissement du différentiel, et de l'autre côté avec le tube coulissant sur lequel il prend appui par l'intermédiaire d'une butée axiale à roulement.

On comprend donc déjà que le moyen d'actionnement hydraulique est intégré au palier extérieur au carter de différentiel, ce qui minimise considérablement l'encombrement au voisinage du carter.

On précisera encore ici que le tube coulissant est constitué de deux tronçons de tube emmanchés et accrochés par l'intermédiaire d'un système du type baïonnette ou analogue, et dont les extrémités libres sont immobilisées en rotation par des moyens respectivement solidaires du carter et du palier extérieur précité.

Selon encore une autre caractéristique de l'invention, le moyen d'actionnement précité est à commande hydraulique et comporte deux pistons qui coulissent dans le palier extérieur parallèlement aux arbres de sortie et qui comportent chacun un embout engagé dans une ouverture ménagée dans un flasque solidaire de l'un des tronçons de tube pour ainsi permettre tant le déplacement axial des deux tronçons de tube que leur immobilisation en rotation.

L'invention vise également un véhicule à groupe moto-propulseur transversal comportant un différentiel dont l'un des arbres de sortie est un arbre intermédiaire porté par un palier extérieur, ce véhicule comportant un dispositif répondant à l'une ou l'autre des caractéristiques ci-dessus et étant associé au différentiel pour commander une variation de son glissement.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique et en bout d'un essieu de véhicule auquel est associé un groupe moto-propulseur transversal comportant un différentiel auquel sont associés les moyens selon cette invention ;

La figure 2 est une vue schématique et en coupe verticale du différentiel, la coupe passant par l'axe des arbres de sortie associés au différentiel;

La figure 3 est une vue similaire à la figure 2 mais à une échelle agrandie et montrant un mode de réalisation du dispositif selon cette invention ; et

La figure 4 est une vue en coupe suivant la ligne IV-IV de la figure 3.

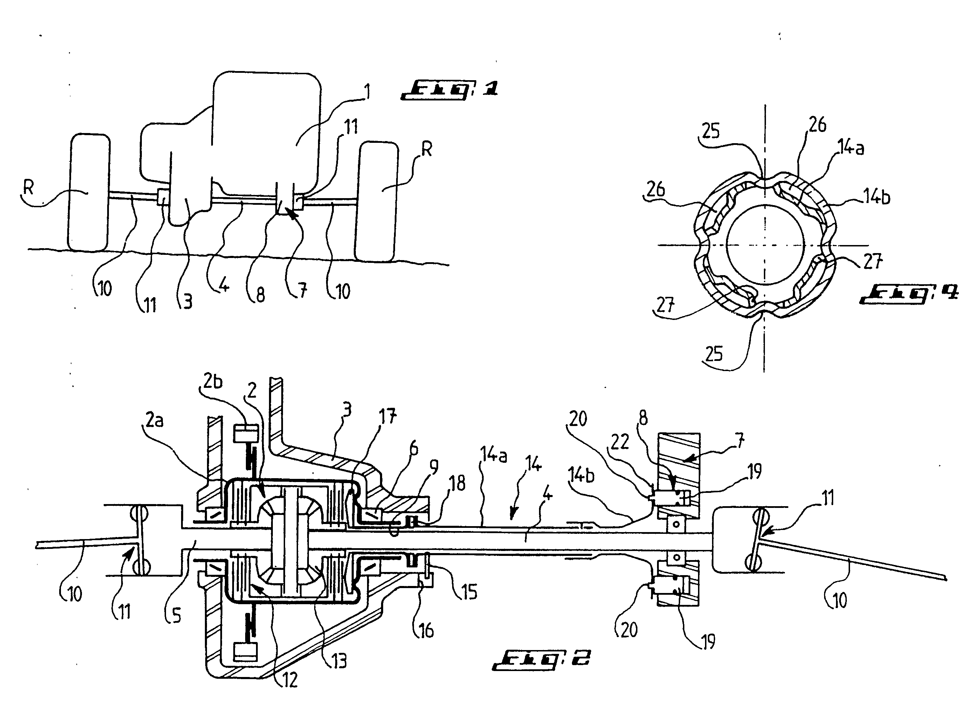

En se reportant aux figures 1 à 3, on voit un groupe moto-propulseur 1 auquel est intégré un différentiel 2 d'un type connu en soi et logé dans un carter 3 dont l'un 4 des arbres de sortie 4, 5 est porté d'un côté par un palier 6 solidaire du et intérieur au carter 3, et de l'autre côté par un palier 7 extérieur à ce carter.

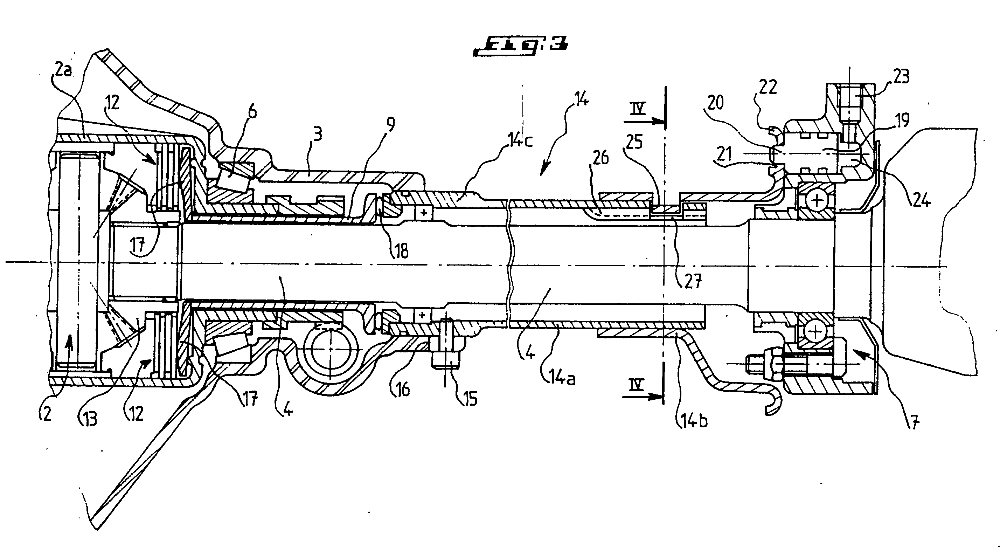

Conformément à l'invention, le palier 7 supporte des moyens d'actionnement hydraulique 8 d'un organe tubulaire 9 entourant l'arbre de sortie 4 au niveau du palier intérieur 6, comme on le voit bien sur les figures 2 et 3.

On a montré en 10 des arbres de transmission aux roues R, lesquels arbres sont couplés, comme connu en soi, aux arbres de sortie 4, 5 du différentiel 2, par l'intermédiaire de joints universels de transmission 11.

Le différentiel 2 comporte essentiellement, comme cela est connu en soi, un boîtier 2a entraîné par une roue dentée 2b et contenant une pluralité de disques coaxiaux repérés d'une manière générale en 12, étant bien entendu que le boîtier 2a contient aussi des pignons planétaires 13 couplés aux arbres de sortie 4 et 5 et portant eux aussi des disques coopérant avec les disques solidaires du boîtier 2a de différentiel 2.

Suivant une caractéristique essentielle de l'invention, l'arbre de sortie 4, entre le palier intérieur 6 et le palier extérieur 7 au carter 3 de différentiel 2, est entouré par un tube coulissant 14 qui se compose de deux tronçons de tube 14a, 14b qui sont solidaires l'un de l'autre.

Le tronçon de tube 14a est bloqué en rotation par rapport au carter 3 du différentiel 2 grâce à un ergot ou analogue 15 fixé au tronçon 14a et pouvant coulisser parallèlement à l'arbre 4 dans une ouverture 16 ménagée dans le carter 3.

Le tube coulissant 14 est en appui d'un côté, par le tronçon 14a, sur l'organe tubulaire 9, et, de l'autre côté, par le tronçon 14b, sur les moyens d'actionnement hydraulique 8.

L'organe tubulaire 9, qui entoure l'arbre de sortie 4 et tourne librement avec le boîtier 2a du différentiel, coopère d'un côté avec des leviers radiaux 17 agissant sur les disques 12 coaxiaux à l'arbre de sortie pour faire varier le glissement du différentiel 2. Cet organe tubulaire 9 coopère de l'autre côté avec le tronçon 14a du tube coulissant 14 sur lequel il prend appui par l'intermédiare d'une butée axiale à roulement 18. Ainsi, comme on le décrira plus en détail, à propos du fonctionnement, le déplacement axial du tronçon 14a immobile en rotation par rapport à l'arbre de sortie 4 commandera le déplacement axial de l'organe tubulaire 9 pour agir sur les leviers radiaux 17.

Les deux tronçons de tube 14a, 14b sont, comme on le voit sur les figures 3 et 4, emmanchés l'un dans l'autre et accrochés par l'intermédiaire d'un système du type baïonnette ou analogue qui sera décrit plus loin dans les explications relatives au montage.

Les moyens d'actionnement 8 intégrés au support de palier extérieur 7 comprennent deux pistons 19 qui sont montés coulissants parallèlement aux arbres de sortie 4, 5, comme on le voit bien sur les figures 2 et 3. Chacun de ces pistons 19 comporte un embout 20 qui s'engage dans une ouverture 21 ménagée dans un flasque 22 formant l'extrémité du tronçon de tube 14b du côté opposé au tube 14a. Ainsi, les embouts 20 des pistons 19 constituent un moyen de poussée axiale du tronçon 14b et donc du tronçon 14a, aussi bien qu'un moyen d'immobilisation en rotation du tronçon 14b, étant entendu que le tronçon 14a est lui-même immobilisé en rotation par l'ergot 15, comme expliqué précédemment.

Mais on expliquera brièvement ci-après le fonctionnement du dispositif qui vient d'être décrit.

On effectue une mise en pression dans le circuit hydraulique qui aboutit par le conduit 23 (voir figure 3) dans des chambres 24 ménagées dans le support de palier extérieur 7 et contenant les pistons coulissants 19. Dès lors, l'alimentation en fluide hydraulique dans les chambres ou cylindres 24 provoquera une poussée des pistons 19 et donc des tronçons de tube 14a, 14b, et de l'organe tubulaire 9 qui tourne librement, grâce au roulement 18, avec le boîtier 2b du différentiel 2. Il en résulte qu'on réalise ainsi, par basculement des leviers 17, un serrage des disques 12 et par conséquent une réduction du glissement du différentiel.

Enfin, on expliquera maintenant comment s'effectue le montage du dispositif selon cette invention.

Le carter 3 du différentiel et le palier extérieur 7 étant en place, le tube coulissant 14 est engagé entre ces deux éléments en le raccourcissant au maximum par emmanchement du tronçon de tube 14a dans le tronçon de tube 14b, et cela de façon que des bossages internes 25 du tronçon 14b coulissent jusqu'au fond de rainures 26, comme on le voit bien sur la figure 4.

Le flasque 22 est mis en contact avec le palier 7, de sorte que les ouvertures 21 s'engagent sur les embouts 20 des pistons 19. Ensuite, on écarte les deux tronçons 14a, 14b en enfilant l'extrémité 14c (figure 3) du tronçon 14a dans l'alésage correspondant du carter 3, jusqu'à la mise en butée de cette extrémité contre l'extrémité en regard de l'organe tubulaire 9 par l'intermédiaire du roulement 18.

Les bossages internes 25 étant alors en face d'encoches 27 ménagées dans le tronçon de tube 14a, on tourne ce tronçon de manière à engager les bossages 25 dans lesdites encoches, et pour qu'ils s'y maintiennent, on met en place l'ergot 15 d'arrêt en rotation du tronçon 14a, lequel ergot est fixé à ce tronçon comme on l'a expliqué précédemment et peut coulisser parallèlement au tronçon 14a dans l'évidement ou lumière 16.

Les deux tronçons 14a, 14b, ainsi immobilisés en rotation, ne peuvent pas se désaccoupler. Enfin, on engage l'arbre intermédiaire 4 par le palier extérieur 7 à travers les tronçons 14a, 14b formant le tube coulissant 14, jusqu'à ce que l'extrémité dudit tube s'emmanche dans l'organe tubulaire 9 et dans le pignon planétaire 13 du différentiel 2.

On a donc réalisé selon l'invention un dispositif de commande de différentiel à glissement variable dans lequel les moyens de commande hydraulique sont intégrés au palier extérieur supportant l'arbre de sortie du différentiel, étant entendu que le tube coulissant 14 de commande entourant l'arbre de sortie 4 peut être facilement monté et démonté. Ce dispositif présente une grande facilité d'adaptation, notamment aux groupes moto-propulseurs transversaux comportant un arbre de transmission intermédiare porté par un palier extérieur.

Bien entendu, l'invention n'est nullement limitée au mode de réalisation décrit et illustré qui n'a été donné qu'à titre d'exemple.

## Revendications

1. Dispositif de commande d'un différentiel (2) à glissement contrôlé hydrauliquement et logé dans un carter (3) dont l'un (4) des arbres de sortie (4, 5) est porté par un palier (6) intérieur au carter (3), et par un palier (7) extérieur à ce carter, caractérisé en ce que l'arbre de sortie (4) est entouré par un organe tubulaire coulissant (9) situé au niveau du palier intérieur (6) dans le carter (3) et par un tube coulissant (14) bloqué en rotation par rapport au carter (3) et prenant appui d'un côté sur un moyen d'actionnement (8) supporté par le palier (7) extérieur au carter et de l'autre côté sur ledit organe tubulaire coulissant (9) qui coopère d'un côté avec des leviers radiaux (17) agissant sur des disques (12) coaxiaux à l'arbre de sortie (4) pour faire varier le glissement du différentiel (2), et de l'autre côté avec le tube coulissant (14) sur lequel il prend appui par l'intermédiaire d'une butée axiale à roulement (18).

2. Dispositif selon la revendication 1, caractérisé en ce que le tube coulissant (14) est constitué de deux tronçons de tube (14a, 14b) emmanchés et accrochés par l'intermédiaire d'un système du type baïonnette (25, 26, 27), et dont les extrémités libres sont immobilisées en rotation par des moyens (15, 20) respectivement solidaires du carter (3) et du palier extérieur (7).

3. Dispositif selon la revendication 1 ou 2, caractérisé en ce que le moyen d'actionnement précité (8) est à commande hydraulique et comporte deux pistons (19) qui coulissent dans le palier extérieur (7) parallèlement aux arbres de sortie (4, 5) et qui comportent chacun un embout (20) engagé dans une ouverture (21) ménagée dans un flasque (22) solidaire de l'un (14b) des tronçons de tube pour ainsi permettre tant le déplacement axial des deux tronçons de tube (14a, 14b) que leur immobilisation en rotation.

4. Véhicule à groupe moto-propulseur transversal comportant un différentiel dont l'un (4) des arbres de sortie est un arbre intermédiaire porté par un palier extérieur (7), caractérisé en ce qu'il comporte un dispositif selon l'une des revendications 1 à 3 associé au différentiel (2) pour commander une variation de son glissement.

## Patentansprüche

1. Vorrichtung zur Betätigung eines in einem Gehäuse (3) untergebrachten Differenzialgetriebes (2) mit hydraulisch gesteuertem Schlupf, dessen eine (4) der Abtriebswellen (4, 5) durch ein innherhalb des Gehäuses (3) liegenden Lagers (6) und durch ein ausserhalb dieses Gehäuses liegenden Lager (7) getragen wird, dadurch gekennzeichnet, dass die Abtriebswelle (4) von einem im Bereich des inneren Lagers (6) innerhalb des Gehäuses (3) gleitbaren rohrförmigen Glied (9) und von einem drehfest gegenüber dem Gehäuse (3) angeordneten gleitbaren Rohr (14) umgeben ist, wobei das letztere auf einer Seite an einem durch das ausserhalb des Gehäuses liegenden Lager (7) getragenen Betätigungsmittel (8) und auf der anderen Seite an dem besagten gleitbaren rohrförmigen Glied (9) abgestüzt ist, welches auf einer Seite mit auf koaxial zur Abtriebswelle (4) angeordneten Scheiben (12) einwirkenden radialen Hebeln (17) zur Veränderung des Schlupfes des Differenzialgetriebes (2) und auf der anderen Seite mit dem gleitbaren Rohr (14) an welchem es sich über ein achsiales Druckkugellager (18) abstützt, zusammenwirkt.

2. Vorrichtung nach Anspruch 1, dadurch gekennzeichnet, dass das gleitbare Rohr (14) aus zwei ineinandergreifende und über ein bajonettartiges System (25, 26, 27) miteinander verhakten Rohrstücken (14a, 14b) besteht, deren freie Enden drehfest durch jeweils mit dem Gehäuse (3) und dem äusseren Lager (7) fest verbundene Mittel (15, 20) gehalten wird.

3. Vorrichtung nach Anspruch 1 oder 2, dadurch gekennzeichnet, dass das vorgenannte Betätigungsmittel (8) hydraulisch gesteuert wird und zwei Kolben (19) aufweist, die in dem äusseren Lager (7) parallel zu den Abtriebswellen (4, 5) und welche jeweils einen in eine in einem mit dem einen Rohrstück (14b) fest verbundenen Flausch (22) angeordnete Offnung (21) eingreifenden Ansatz (20) aufweist um somit die achsiale Verschiebung der beiden Rohrstücken (14a, 14b) sowie deren drehfeste Anordnung gestatten.

4. Fahrzeug mit einem quergerichteten Triebwerkssatz, mit einem Differenzialgetriebe, dessen eine (4) der Abtriebswellen eine von einem äusseren Lager (7) getragene Zwischenwelle ist, dadurch gekennzeichnet, dass es eine, dem Differenzialgetriebe (2) zugeordnete Vorrichtung gemäss einem der Ansprüche 1 bis 3 aufweist, um die Veränderung dessen Schlupfes zu steuern.

## Claims

1. Device for operating a differential (2) with a hydraulically controlled slip and housed in a casing (3) one (4) of the output shafts (4, 5) of which is carried by a bearing (6) inside of the casing (3) and by a bearing (7) outside of this casing, characterized in that the output shaft (4) is surrounded by a tubular sliding member (9) located at the inner bearing (6) within the casing (3) and by a sliding tube (14) locked against rotation with respect to the casing (3) and bearing on one side upon an actuating means (8) supported by the bearing (7) placed outside the casing and on the other side upon the said tubular sliding member (9) which cooperates on one side with radial levers (17) acting upon discs (12) coaxial with the output shaft (4) to vary the slip of the differential (2) and on the other side with the sliding tube (14) onto which it bears through the medium of an axial ball thrust bearing (18).

2. Device according to claim 1, characterized in that the sliding tube (14) consists of two tube sections (14a, 14b) fitted into and hooked to each other through the medium of a bayonet-type system (25, 26, 27) and the free ends of which are held against rotation by means (15, 20) made fast to the casing (3) and to the outer bearing (7), respectively.

3. Device according to claim 1 or 2, characterized in that the aforesaid actuating means (8) is hydraulically controlled and comprises two pistons (19) which are sliding in the outer bearing (7) in parallel relation to the output shafts (4, 5) and which comprise each one an end portion (20) engaging an opening (21) formed in a flange (22) solid with one (14b) of the tube sections to thus allow the axial displacement of both tube sections (14a, 14b) as well as their holding against rotation.

4. Vehicle with a transverse power unit comprising a differential, one (4) of the output shafts of which is an intermediate shaft carried by an outer bearing (7), characterized in that it comprises a device according to one of claims 1 to 3 associated with the differential (2) to control a variation in its slip.

Fig. 1

Fig. 4

Fig. 2

EP 0 283 389 B1

_Fig 3_

EP 0 283 389 B1